(19) **Europäisches Patentamt**

**European Patent Office**

**Office européen des brevets**

(11) **EP 0 569 993 B1**

(12) **EUROPEAN PATENT SPECIFICATION**

(45) Date of publication and mention
of the grant of the patent:
**31.01.1996 Bulletin 1996/05**

(51) Int Cl.$^6$: **G01C 19/72**

(21) Application number: **93107836.4**

(22) Date of filing: **13.05.1993**

(54) **Optical-interference-type angular rate sensor**

Optischer interferometrischer Drehgeschwindigkeitssensor

Capteur de vitesse angulaire du type interferomètre optique

(84) Designated Contracting States:
**DE FR GB**

(30) Priority: **14.05.1992 JP 121489/92**
**29.05.1992 JP 138113/92**
**04.06.1992 JP 144286/92**

(43) Date of publication of application:
**18.11.1993 Bulletin 1993/46**

(73) Proprietor: **JAPAN AVIATION
ELECTRONICS INDUSTRY, LIMITED
Shibuya-ku, Tokyo (JP)**

(72) Inventors:
• **Okada, Kenichi,
c/o Japan Aviation Elect. Ind. Ltd
Tokyo (JP)**
• **Usui, Ryuji
21-6 Dogenzaka 1-chome, Shibuya-ku,
Tokyo (JP)**

(74) Representative: **Hoffmann, Eckart, Dipl.-Ing.
D-82166 Gräfelfing (DE)**

(56) References cited:
**EP-A- 0 454 113**          **US-A- 5 048 961**

**Description**

BACKGROUND OF THE INVENTION

The present invention relates to an optical-interference-type angular rate sensor wherein clockwise and counterclockwise light beams (hereinafter referred to as CW and CCW light beams) are passed through an optical path forming at least one loop and the phase difference between the CW and CCW light beams is detected to thereby measure an angular rate applied to the optical path about the axis thereof.

A description will be given, with reference to Fig. 1, of a conventional optical-interference-type angular rate sensor like for example described in EP-A-0 454 113. It must be noted here that both the prior art and the present invention will be described in connection with a fiber optic gyro of the type employing an optical fiber as the above-mentioned optical path.

Light I from a light source 11 passes through an optical coupler 12, a polarizer 13 and an optical coupler 14 and then enters into an optical fiber coil 15 from its opposite ends. CW and CCW light beams which propagate through the optical fiber coil 15 are phase modulated by a phase modulator 16 disposed between one end of the optical fiber coil 15 and the optical coupler 14. The both phase-modulated light beams are combined by the optical coupler 14 into interference light, which is provided via the polarizer 13 to the optical coupler 12 and then branched therefrom to a photodetector 17 for photoelectric conversion.

With no angular rate $\Omega$ applied to the optical fiber coil 15 in its circumferential or peripheral direction, the phase difference between the both light beams in the optical fiber coil 15 is zero ideally, but the application of an angular rate causes a Sagnac phase difference $\Delta\Phi_s$ which is expressed by the following equation:

$$\Delta\Phi_s = 4\pi RL \cdot \Omega/C\lambda \tag{1}$$

where C is the velocity of light, $\lambda$ is the wavelength of light in a vacuum, R is the radius of the optical fiber coil 15 and L is the length of the optical fiber of the optical fiber coil 15.

Based on a reference signal Sr of a frequency $f_m$ from a reference signal generator 24, a phase modulation driver 22 generates a drive signal Sp of the same frequency $f_m$ and applies it to the phase modulator 16. Letting the phase modulation of the CW and CCW light beams by the phase modulator 16 be represented by $P(t) = A\sin\omega_m t$, the photoelectric conversion output Vp of the photodetector 17 can be expressed by the following equation:

$$Vp = (I/2)K_{op}K_{pd}\{1 + \cos\Delta\Phi_s[\Sigma\varepsilon_n(-1)^n J_{2n}(X)\cos 2n\omega_m t']$$

$$- \sin\Delta\Phi_s[2\Sigma(-1)^n J_{2n+1}(X)\cos(2n+1)\omega_m t']\} \tag{2}$$

$$X = 2A\sin\pi f_m\tau \tag{3}$$

In the above,

$\Sigma$: summation operator from n = 0 to infinity;
A: modulation index;
$\omega_m$: angular frequency of phase modulation ($\omega_m = 2\pi f_m$);
$\tau$: time for the propagation of light through the optical fiber coil 15;
t': t - $\tau$/2;
$\varepsilon_n$: 1 for n = 0, $\varepsilon_n$ = 2 for n $\geqq$ 1;
$K_{op}$: optical loss on the emitted light I from the light source 11 which is caused or imposed by the optical path to the photodetector 17 via the optical fiber coil 15;
$K_{pd}$: constant which is determined by a photoelectric conversion coefficient, an amplifier gain and so forth;
I: quantity of light emitted from the light source 11;
$I_o$: maximum quantity of light which reaches the photodetector 17 ($I_o = K_{op} \cdot I$);
$J_n$: Bessel function of the first kind; and
$\Delta\Phi_s$: Sagnac phase difference between the CW and CCW light beams in the optical fiber coil 15.

The output Vp of the photodetector 17 is applied to a synchronous detector 18, wherein the same frequency component as the phase modulation frequency $f_m$, that is, the fundamental harmonic component in Eq. (2), is synchronously detected by the reference signal Sr of the same frequency from the reference signal generator 24. The detected output is applied to a low-pass filter 19, wherein its AC component is cut off, and the DC level corresponding to the fundamental harmonic component (i.e. the component of the frequency $f_m$) in Eq. (2) is taken out with a proper gain, as the output of the fiber optic gyro (hereinafter referred to as an FOG output) at an output terminal 21.

The FOG output $V_1$ is expressed by the following equation:

$$V_1 = I \cdot K_{op} K_{pd} J_1(X) K_{A1} \cdot \sin\Delta\Phi_s$$

$$= K_1 \cdot \sin\Delta\Phi_s \qquad (4)$$

where $K_{A1}$ is the total gain of the synchronous detector 18 and the low-pass filter 19.

Hence the input angular rate $\Omega$ can be detected by measuring the output $V_1$ of the low-pass filter 19.

A signal corresponding to the phase difference $\Delta\Phi_s$ could be detected as the FOG output by the synchronous detection of an arbitrary one of the frequency components in Eq. (2), but it is customary in the art to detect the $\sin\Delta\Phi_s$ component (an odd harmonic component or simply called sine component) which can be detected with the highest sensitivity when the phase difference $\Delta\Phi_s$ is around zero. The detected output of such an arbitrary odd harmonic component can be expressed by changing the suffixed numerals in Eq. (4) to a value representing the selected odd harmonic.

The synchronously detected output $V_1$ of the fiber optic gyro corresponding to the odd harmonic component (the fundamental harmonic component in this example) is a sine function using the phase difference $\Delta\Phi_s$ as a variable, as is evident from Eq. (4) and, therefore, if the phase difference $\Delta\Phi_s$ is sufficiently small, it can be regarded approximately to be equal to the $\sin\Delta\Phi_s$ component. Hence the FOG output $V_1$ given by Eq. (4) exhibits an excellent linearity with respect to the phase difference $\Delta\Phi_s$, but an increase in the phase difference $\Delta\Phi_s$ causes an increase in the linearity error. For example, when the phase difference $\Delta\Phi_s$ is 45°, a 10% linearity error is induced.

Moreover, as is evident from Eq. (4), $K_1$ is a proportional coefficient, and remains unchanged under stable circumferential conditions, but elements forming the coefficient $K_1$ have some temperature coefficients and the input/output gain $K_1$ of the fiber optic gyro, that is, its scale factor varies with temperature. For instance, the first-order Bessel function $J_1(X)$ is relatively stable with respect to a temperature change of the phase modulation index A when the phase modulation index A is chosen such that $X = 1.84$, and the constant $K_{pd}$ and the gain $K_A$ essentially have small temperature coefficients. However, there is a possibility that the optical loss $K_{op}$ varies about 30% when temperature changes in the range from -20°C to +70°C.

## SUMMARY OF THE INVENTION

A first object of the present invention is to provide an optical-interference-type angular rate sensor which yields an output of improved linearity with respect to an input angular rate.

A second object of the present invention is to provide an optical-interference-type angular rate sensor with improved temperature dependence of its scale factor.

According to a first aspect of the present invention, there is provided an optical-interference-type angular rate sensor wherein light from a light source is branched by branch means into clockwise and counterclockwise light beams for propagation through an optical path forming at least one loop, the clockwise and counterclockwise light beams, after having propagated through the optical path, are caused by interference means to interfere with each other, the clockwise and counterclockwise light beams are phase modulated by phase modulator means disposed in series between the branch means and one end of the optical path, the intensity of the interference light is detected as an electrical signal by photodetector means, and the sine component of the Sagnac phase difference $\Delta\Phi_s$ which is caused by an angular rate applied to the optical path around its axis is demodulated by first demodulator means to thereby detect the angular rate, the optical-interference-type angular rate sensor including: second demodulator means for demodulating the cosine component of the phase difference $\Delta\Phi_s$ from the electrical signal; means for generating a scale factor stabilizing signal on the basis of the cosine component from the second demodulator means; correcting signal generator means for generating a correcting signal on the basis of the sine component; adder means for adding the correcting signal to the scale factor stabilizing signal; reference voltage generating means for generating a reference signal; comparator means for comparing the output of the adder means with the reference voltage signal and for generating an error signal; and feedback loop means for controlling the intensity of the interference light to the photodetector or the gain of its output so that the error signal is reduced to zero.

According to a second aspect of the present invention, there is provided an optical-interference-type angular rate sensor wherein light from a light source is branched by branch means into clockwise and counterclockwise light beams for propagation through an optical path forming at least one loop, the clockwise and counterclockwise light beams, after having propagated through the optical path, are caused by interference means to interfere with each other, the clockwise and counterclockwise light beams are phase modulated by phase modulator means disposed between the branch means and one end of the optical path, the intensity of the interference light is detected as an electrical signal by photodetector means, and the sine component of the Sagnac phase difference $\Delta\Phi_s$ which is caused by an angular rate applied to the optical path around its axis is demodulated by sine component demodulator means to thereby detect the angular rate, the optical-interference-type angular rate sensor including: first and second cosine component demodulator means for demodulating first and second cosine components of the phase difference from the electrical signal; first subtractor means for calculating the difference between the first and second cosine components; modulation control means for controlling the modulation index of the phase modulator means on the basis of the output of the first subtractor means so that the first and second cosine components are equal to each other; cosine component combiner means for combining the first and second cosine components at a predetermined ratio into a composite cosine component; comparator means for comparing a signal corresponding to the composite cosine component with a predetermined value and for generating an error signal; and feedback loop means for controlling the intensity of the interference light to the photodetector means or the gain of its output so that the error signal is reduced to zero.

## BRIEF DESCRIPTION OF THE DRAWINGS

Fig. 1 is a block diagram showing a conventional optical-interference-type angular rate sensor;

Fig. 2 is a block diagram illustrating an embodiment of the present invention;

Fig. 3A is a graph showing an example of a scale factor linearity error of the conventional optical-interference-type angular rate sensor;

Fig. 3B is a graph showing a scale factor linearity error of the embodiment according to the present invention;

Fig. 4 is a block diagram illustrating a specific operative example of a correcting signal generator 27 in Fig. 2;

Fig. 5 is a block diagram illustrating another embodiment of the present invention;

Fig. 6A is a graph showing an example of the linearity of the scale factor of the conventional optical-interference-type angular rate sensor;

Fig. 7 is a block diagram illustrating another embodiment of the present invention;

Fig. 8 is a block diagram illustrating an embodiment according to the second aspect of the present invention;

Fig. 9 is a graph showing Bessel functions;

Fig. 10 is a block diagram illustrating the principal part of a modified form of the Fig. 8 embodiment;

Fig. 11 is a block diagram illustrating the principal part of another modified form of the Fig. 8 embodiment; and

Fig. 12 is a block diagram illustrating the principal part of still another modified form corresponding to the Fig. 11 embodiment.

## DESCRIPTION OF THE PREFERRED EMBODIMENTS

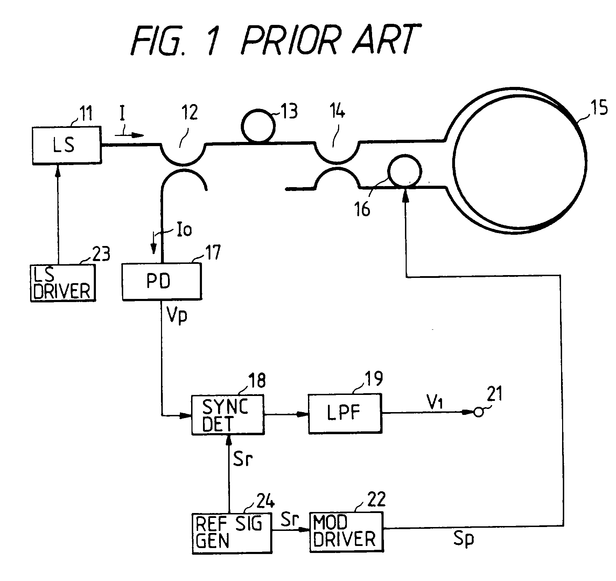

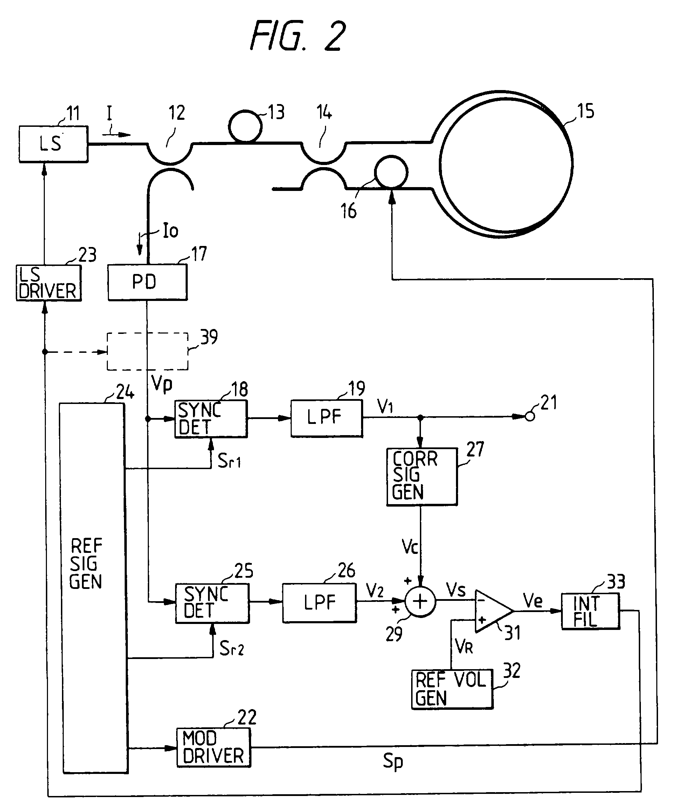

Fig. 2 illustrates in block form an embodiment of the present invention, in which the parts corresponding to those in Fig. 1 are identified by similar reference numerals. A photoelectric conversion signal Vp from the photodetector 17 is applied to the synchronous detector 18 forming first demodulator means as in the prior art, wherein a component of the same frequency as the phase modulation frequency $f_m$ (i.e. the fundamental harmonic component) is synchronously detected by a reference signal $S_{r1}$ from the reference signal generator 24. The thus detected output is fed to the low-pass filter 19, wherein a DC level signal corresponding to the level of the fundamental harmonic component is extracted, and it is output with a predetermined gain, as the FOG output $V_1$, to the terminal 21. The FOG output $V_1$ is expressed by Eq. (4). The photoelectric conversion signal Vp is also applied to a synchronous detector 25 forming second demodulator means, wherein a frequency component twice higher than the phase modulation frequency $f_m$ is synchronously detected by a reference signal $S_{r2}$ of the same frequency $2f_m$ from the reference signal generator 24 and the detected frequency component is extracted, by a low-pass filter 26, as a DC component with a predetermined gain. As the output $V_2$ of the low-pass filter 26 provided at this time, a $\cos\Delta\Phi_s$ component is obtained which is expressed by the following equation:

$$V_2 = I \cdot K_{op} K_{pd} J_2(X) K_{A2} \cdot \cos\Delta\Phi_s$$

$$= I_o \cdot K_2 \cos\Delta\Phi_s, \tag{5}$$

where $K_{A2}$ is the total gain of the synchronous detector 25 and the low-pass filter 26 and $K_2 = K_{pd} \cdot J_2(X) \cdot K_{A2}$. The thus detected cosine component, that is, the output $V_2$, is used as a signal to stabilize the scale factor.

In this embodiment, in order that a linearity error, $\varepsilon = I_o K_1(\sin\Delta\Phi_s - \Delta\Phi_s)$, of the FOG output $V_1$, expressed by Eq. (4), with respect to the phase difference $\Delta\Phi_s$ may be reduced to zero, a correcting signal Vc is generated by a correcting signal generator 27 on the basis of the output $V_1$ and is added with the output $V_2$ of the low-pass filter 26 in an adder 29. The output Vs of the adder 29 is expressed by the following equation:

$$Vs = V_2 + Vc$$

$$= I_o K_2 \cdot \cos\Delta\Phi_s + Vc. \tag{6}$$

The correcting signal Vc is given by the following polynomial of high order:

$$Vc = C_0 + C_1V_1 + C_2V_1^{\,2} + C_3V_1^{\,3} + \cdots + C_kV_1^{\,k}. \qquad (7)$$

The output Vs of the adder 29 is supplied to a differential amplifier 31, wherein it is differentially operated with a reference voltage $V_R$ from a reference voltage generator 32. The error output Ve of the differential amplifier 31 is given by the following equation:

$$Ve = V_R - Vs$$

$$= V_R - (I_o K \cdot \cos\Delta\Phi_s + Vc), \qquad (8)$$

where it is assumed that $K_1$ and $K_2$ are pre-adjusted so that $K = K_1 = K_2$.

The output Ve of the differential amplifier 31 is applied to an integrating filter 33. The output of the integrating filter 33 is provided to a light source driver 23 which controls the quantity of light which is emitted from the light source 11. Thus, the quantity of light I from the light source 11 is controlled. Assuming that $V_R = I_o K + K_R$ and $C_0 = 0$ are set at an initial stage, the output Ve of the differential amplifier 31 is zero when no angular rate is being applied, that is, when the phase difference $\Delta\Phi_s$ between the CW and CCW light beams in the optical fiber coil 15 is zero. Suppose that the quantity of light $I_o$ reaching the photodetector 17 has decreased due to an ambient temperature change. As a result, the output Ve becomes a positive voltage on the basis of Eq. (8). The positive voltage is applied to the integrating filter 33, which in turn generates a positive integrated voltage. The light source driver 23 is pre-adjusted to increase the quantity of light I of the light source 11 on the basis of the positive integrated voltage and is controlled so that the input to the integrating filter 33, that is, the output Ve of the differential amplifier 31 is always zero. In consequence, the following equation holds.

$$V_R = I_o K \cdot \cos\Delta\Phi_s + Vc \qquad (9)$$

The FOG output $V_1$ that is provided by the operation of the afore-mentioned scale factor stabilizing system is expressed by the following equation on the basis of Eqs. (4) and (9).

$$V_1 = \{(K_R - Vc)/\cos\Delta\Phi_s\}\sin\Delta\Phi_s \qquad (10)$$

Based on Eq. (10), the linearity error Li of the scale factor is given by the following equation:

$$Li = \{[(K_R - Vc)/\cos\Delta\Phi_s]\sin\Delta\Phi_s - K_R\Delta\Phi_s\}$$

$$\div (K_R\Delta\Phi_s) \times 100\%. \qquad (11)$$

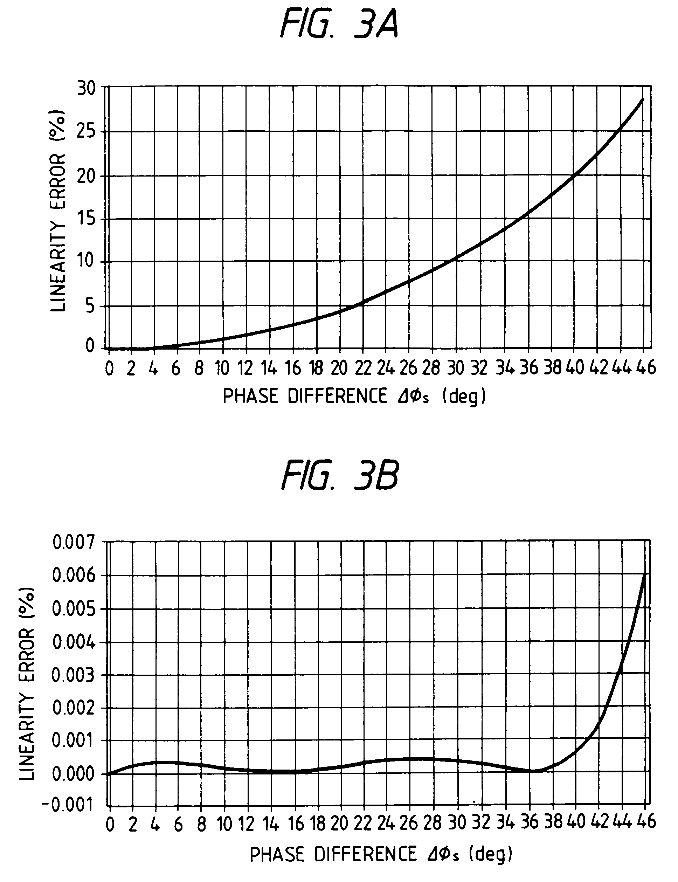

In Eq. (11), if the correcting signal Vc is zero, the Sagnac phase difference $\Delta\Phi_s$ increases and the linearity error also increases, as seen from Fig. 3A which is a graph showing the results of calculation of the linearity error Li. To improve this linearity error, the respective coefficients $C_0$ to $C_k$ in Eq. (7) expressing the correcting signal Vc are calculated by the least square method so that the numerator in Eq. (11) becomes zero with respect to the Sagnac phase difference $\Delta\Phi_s$. Fig. 3B is a graph showing the results of calculation of the linearity in the case where the correcting signal Vc was produced with coefficients $C_k$ of up to the fourth order through utilization of data of the FOG output $V_1$ produced when the Sagnac phase difference $\Delta\Phi_s$ was within the range of 0 to 40°.

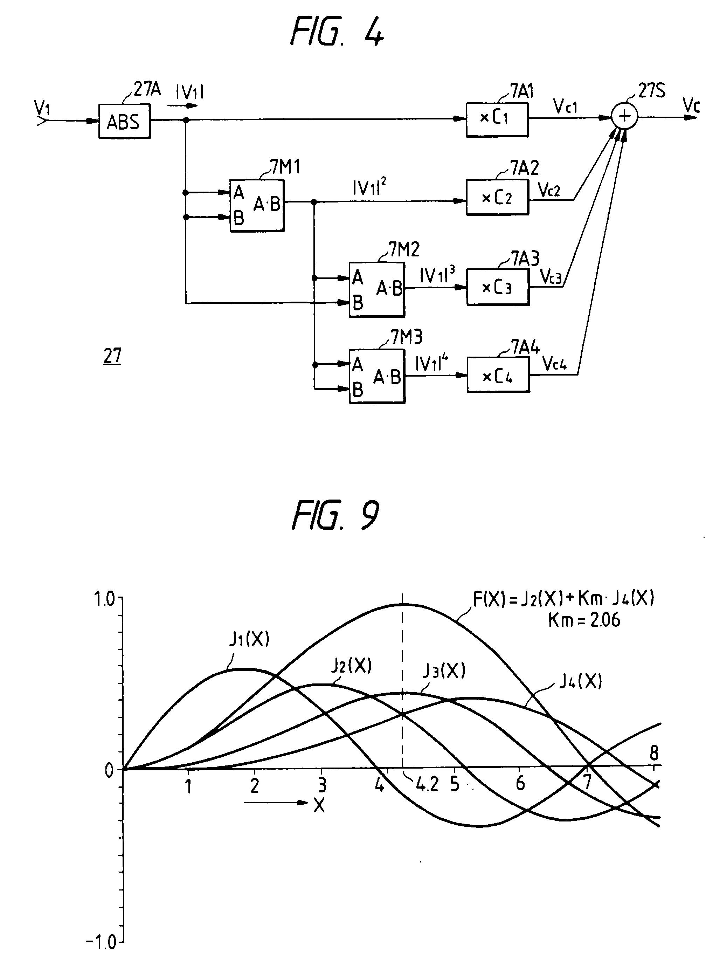

Fig. 4 illustrates in block form a specific operative example of the correcting signal generator 27 which generates the correcting signal Vc in the case where $C_0 = 0$ and $k = 4$ in Eq. (7). At first, the signal $V_1$ is rendered by an absolute value circuit 27A into the form of an absolute value. While in this example the value of the signal $V_1$ is changed into the corresponding absolute value and made independent of the polarity of the input angular rate, the correcting signal Vc could be produced without using such an absolute value representation. In this instance, however, to keep substantially the same accuracy of correction as is obtainable with this example, coefficients of higher order, that is, more multiplier means, are needed. The absolute value output $|V_1|$ is fed to an amplifier 7A1, wherein it is amplified by a factor of $C_1$ to provide a first-order correcting signal $V_{c1} = C_1|V_1|$. The absolute value output $|V_1|$ is also squared by a multiplier 7M1 and is further amplified by a factor of $C_2$ in an amplifier 7A2, providing a second-order correcting signal $V_{c2} = C_2|V_1|^2$. A multiplier 7M2 multiplies the output of the multiplier 7M1 and the output of the absolute value circuit 27A, and the multiplied output is further amplified by a factor of $C_3$ in an amplifier 7A3 to provide a third-order correcting signal $V_{c3} = C_3|V_1|^3$. A multiplier 7M3 squares the output of the multiplier 7M1 and the squared output is amplified by a factor of $C_4$ in an amplifier 7A4 to provide a fourth-order correcting signal $V_{c4} = C_4|V_1|^4$. These correcting signals $V_{c1}$ through $V_{c4}$ are added together by an adder 27S and the added output is provided as the linearity correcting signal Vc. In this case, the gains $C_1$, $C_2$, $C_3$ and $C_4$ of the amplifiers 7A1, 7A2, 7A3 and 7A4 are set to the same values as those of the coefficients in Eq. (7).

Incidentally, the respective coefficients of the correcting signal used to obtain the graph of Fig. 3B are as follows:

$$C_1 = -0.000109$$

$$C_2 = 0.03344$$

$$C_3 = -0.000038$$

$$C_4 = 0.0000268.$$

The reference voltage $V_R$ is set to 10V. By adding the correcting signal Vc to the signal $V_2$ of an even harmonic component of the output from the photodetector 17 as referred to above, the linearity can be improved within 0.001% (within the range of $\Delta\Phi_s = 0$ to 40°). While in the above the output of the integrating filter 33 is fed back to the light source driver 23, it is also possible to obtain the same results as described above by feeding back the output of the integrating filter 33 to an automatic gain control circuit 39 provided at the output side of the photodetector 17 to control the gain $K_{pd}$ in Eq. (2).

In the Fig. 2 embodiment the same frequency component as the phase modulation frequency $f_m$ is used as the FOG output (i.e. the sine component output) $V_1$, but other odd harmonic components such as third, fifth, ⋯ harmonic components may also be used. Moreover, the second harmonic component used as the cosine component output $V_2$ may also be replaced with fourth, sixth, ⋯ and other even harmonic components. Although in the above the output $V_2$ is extracted by the synchronous detector 25, it is also possible to selectively extract a second or higher even harmonic component from the output of the photodetector 17 by a band-pass filter and use the filter output as the output $V_2$ after rendering it into DC form.

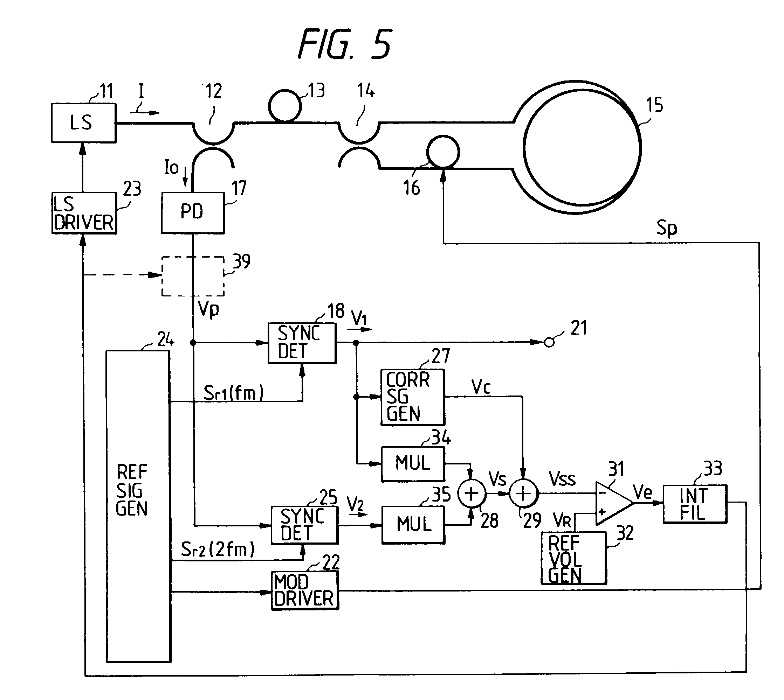

The Fig. 2 embodiment has been described in connection with the case of employing only one cosine component (i.e., even harmonic component) to stabilize the scale factor, but another method for suppressing the FOG output variation which is caused by a change in the quantity of light $I_o$ is disclosed in, for example, U.S. Patent No. 4,863,358. According to this method, predetermined sine and cosine components in Eq. (2) are synchronously detected, the squared sum of which is produced to generate the signal Vs such that $Vs(\sin^2\Delta\Phi_s + \cos^2\Delta\Phi_s) = Vs$ and the quantity of light I which is emitted from the light source 11 is controlled so that the signal Vs reaches a fixed reference level. Fig. 5 shows the application of this method to the embodiment of Fig. 2.

In Fig. 5 the outputs $V_1$ and $V_2$ from the synchronous detectors 18 and 25 (which are assumed to include the low-pass filters corresponding to those 19 and 26 in Fig. 2, respectively) are squared by multipliers 34 and 35 and then added together by an adder 28. The output Vs of the adder 28 is given by the following equation:

$$Vs = V_1^2 + V_2^2. \tag{12}$$

As described previously with respect to the Fig. 2 embodiment, by setting the respective gains $K_{A1}$ and $K_{A2}$ such that $K = K_{A1}J_1(X)K_{pd} = K_{A2}J_2(X)K_{pd}$, Eq. (12) becomes as follows:

$$Vs = I_o^2 K^2(\sin^2\Delta\Phi_s + \cos^2\Delta\Phi_s) = I_o^2 K^2. \tag{13}$$

The output Vs of the adder 28 is applied to the adder 29, wherein it is added to the correcting signal Vc expressed by Eq. (7) to produce a signal Vss. The output Vss of the adder 29 is expressed by the following equation, using Eq. (13).

$$Vss = I_o^2 \cdot K^2 + Vc \tag{14}$$

The output Vss of the adder 29 is applied to the differential amplifier 31, wherein it is differentially operated with the reference voltage $V_R$ from the reference voltage generator 32. The error output Ve of the differential amplifier 31 is given by the following equation:

$$Ve = V_R - Vss = V_R - I_o^2 K^2 - Vc. \tag{15}$$

The output Ve of the differential amplifier 31 is applied to the integrating filter 33 and, as is the case with the Fig. 2 embodiment, the integrated output is provided to the light source driver 23 to control the quantity of light I that is emitted from the light source 11. Suppose that $V_R = I_o^2 \cdot K^2$ and $C_0 = 0$ are set at an initial stage. When no angular rate is being applied to the optical fiber coil 15, that is, when the phase difference $\Delta\Phi_s$ between the CW and CCW light beams in the optical fiber coil 15 is zero, Vc in Eq. (15) is zero, and hence Ve by Eq. (15) is zero.

Now, let it be assumed that the quantity of light $I_o$ reaching the photodetector 17 has been reduced by a change in the ambient temperature. In this case, the error signal Ve becomes a positive voltage on the basis of Eq. (15). Suppose that this positive voltage is applied to the integrating filter 33 to generate a positive integrated voltage. Assuming that the light source driver 23 is so adjusted as to increase the quantity of light from the light source 11 with the positive

EP 0 569 993 B1

integrated voltage, it is controlled so that the input to the integrating filter 33, that is,the output Ve from the differential amplifier 31, is always zero. As a result, the following equation holds:

$$V_R = I_o^2 \cdot K^2 - Vc. \tag{16}$$

The FOG output $V_1$, which is provided by operating such a quantity-of-light control circuit to stabilize the scale factor, is given by the following equation on the basis of Eqs. (4) and (16).

$$V_1 = I_o \cdot K \cdot \sin\Delta\Phi_s$$

$$= \sqrt{V_R \text{-} Vc} \cdot \sin\Delta\Phi_s \tag{17}$$

Based on Eq. (17), the linearity error Li is given as follows:

$$Li = ( \sqrt{V_R \text{-} Vc} \cdot \sin\Delta\Phi_s - \sqrt{V_R} \cdot \Delta\Phi_s)/( \sqrt{V_R} \cdot \Delta\Phi_s) \times 100\% \tag{18}$$

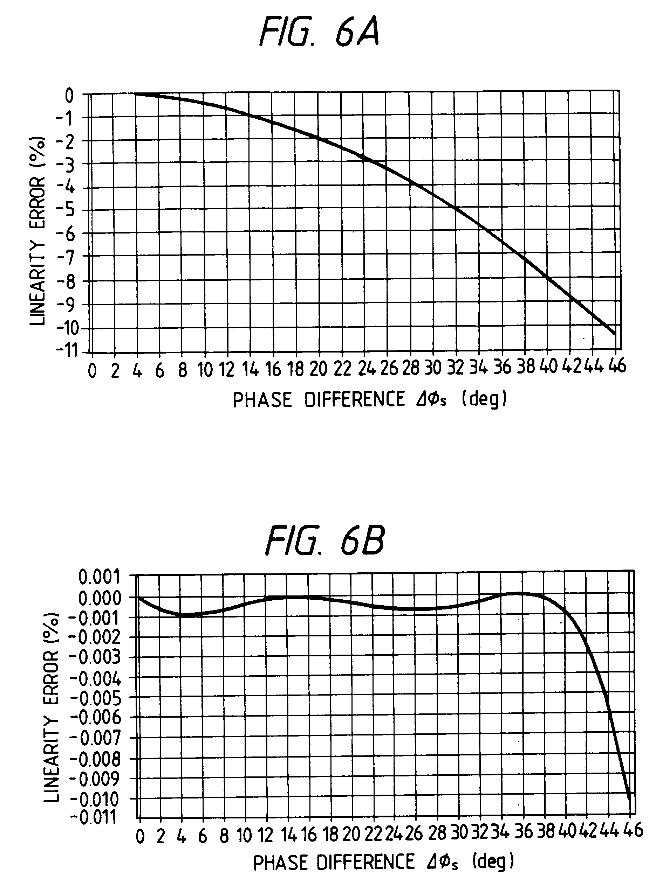

Fig. 6A is a graph showing the linearity error in the case where the correcting signal Vc is zero in Eq. (18). In the generation of the correcting signal Vc to improve the linearity, the respective coefficients $C_0$ through $C_k$ in Eq. (17) are calculated by the least square method so that the numerator in Eq. (18) may be zero with respect to the Sagnac phase difference $\Delta\Phi_s$, as in the case of the Fig. 2 embodiment. Fig. 6B is a graph showing the linearity error improved by the correcting signal Vc produced with the coefficients $C_0$ to $C_4$ of up to fourth order through utilization of data of the FOG output $V_1$ obtained in the case of the Sagnac phase difference $\Delta\Phi_s$ being within the range of from 0 to 40°. Incidentally, the respective coefficients of the correcting signal which are determined by the least square method and used to obtain the graph of Fig. 6B are as follows:

$$C_0 = 0$$

$$C_1 = 0.000997$$

$$C_2 = -0.3324$$

$$C_3 = 0.01106$$

$$C_4 = -0.02808.$$

The reference voltage $V_R$ is set to 3.162 V. Also in the case where the conventional scale factor stabilizing method disclosed in the afore-mentioned U.S. patent is applied to the embodiment of Fig. 2, the linearity error can be improved within 0.001% (within the range of $\Delta\Phi_s = 0$ to 40°). Although the Fig. 5 embodiment has also been described in connection with the case where the output of the integrating filter 33 is fed back to the light source driver 23, it is also possible to obtain the same results as described above by feeding the integrated output back to the automatic gain control circuit 39 inserted at the output side of the photodetector 17 to control the gain (part of $K_{pd}$) in Eq. (2).

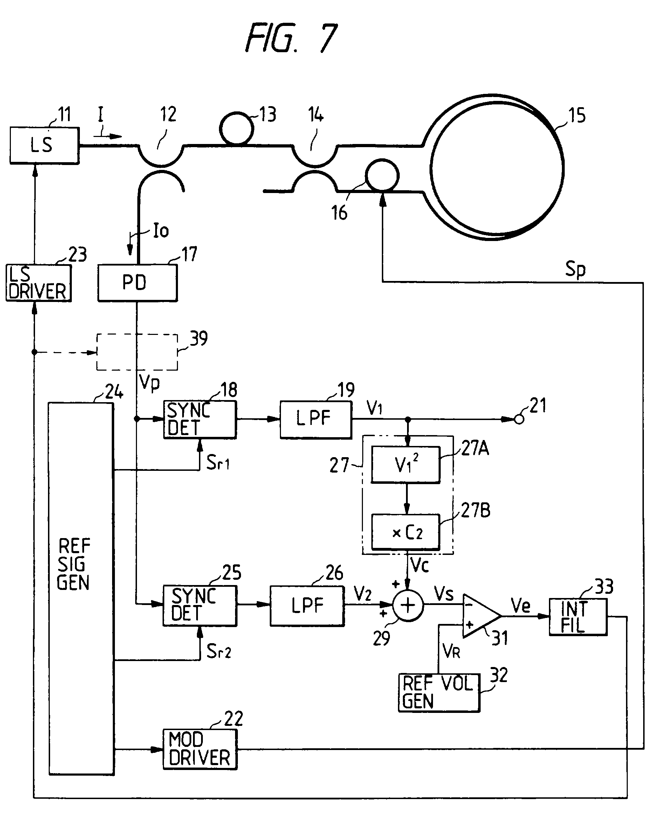

Fig. 7 illustrates a modified form of the Fig. 2 embodiment, in which the generation of the correcting signal Vc by the correcting signal generator 27 is simplified. Based on the fact that, of the afore-mentioned coefficients $C_0$ to $C_4$, the second-order coefficient $C_2$ is remarkably large as can be seen from their concrete values which provided the results depicted in Figs. 3B and 6B, the correcting signal is generated in the form of $Vc = C_2 V_1^2$, with the other coefficients set to zeros in Eq. (7).

The correcting signal generator 27 is made up of a multiplier 27A and an amplifier 27B. The output $V_1$ of the low-pass filter 19 is squared by the multiplier 27A and is amplified by a factor of $C_2$ in the amplifier 27B, and the amplified output $Vc = C_2 V_1^2$ is added to the output $V_2$ of the low-pass filter 26. The output Vs of the adder 29 is expressed by the following equation:

$$Vs = V_2 + C_2 V_1^2 = V_2 + Vc. \tag{19}$$

By setting the gains $K_{A1}$ and $K_{A2}$ such that $K = K_{A1}J_1(X)K_{pd} = K_{A2}J_2(X)K_{pd}$, Eq. (19) is expressed by the following equation, using Eq. (5).

$$Vs = I_o K(C_2 I_o K\sin^2\Delta\Phi_s + \cos\Delta\Phi_s) \tag{20}$$

The output Vs of the adder 29 is compared, by the differential amplifier 31, with the reference voltage $V_R$ available from the reference voltage generator 32, by which the error signal Ve is yielded. Since the negative feedback loop operates so that the error signal Ve is reduced to zero, the following equation holds.

7

$$V_R = I_oK(C_2I_oK\sin^2\Delta\Phi_s + \cos\Delta\Phi_s) \tag{21}$$

By setting $I_oK = Z$ and solving Eq. (21) with respect to $Z$, the following equation is obtained.

$$Z = \{-1 + (1 + 4C_2V_R\tan\Delta\Phi_s)^{1/2}\}/(2C_2\tan\Delta\Phi_s \cdot \sin\Delta\Phi_s) \tag{22}$$

By substituting Eq. (22) for $I_oK_{op}K_{pd}J_1(X)K = I_oK = Z$ in Eq. (4), the FOG output $V_1$ is expressed by the following equation:

$$V_1 = Z\sin\Delta\Phi_s$$

$$= 2V_R\tan\Delta\Phi_s/\{1 + (1 + 4C_2V_R\tan\Delta\Phi_s)^{1/2}\}. \tag{23}$$

Eq. (23) has nothing to do with the quantity of light $I_o$, and hence the scale factor is stabilized with respect to a temperature change. Furthermore, the linearity is also higher in accuracy than in the case of approximating the FOG output by $\tan\Delta\Phi_s$ alone, since $\tan\Delta\Phi_s$ is corrected by the denominator in Eq. (23) with an appropriate selection of the value $C_2$. The linearity error Li of the FOG output is given by the following equation:

$$Li = \{2\tan\Delta\Phi_s/[1 + (1 + 4C_2V_R\tan\Delta\Phi_s)^{1/2}] - \Delta\Phi_s\}$$

$$\div \Delta\Phi_s \times 100\%. \tag{24}$$

The coefficient $C_2$ is computed such that the linearity error is minimum within a predetermined range of the phase difference, and the coefficient is set as the gain of the amplifier 27B in Fig. 7.

In the Fig. 7 embodiment the component of the same frequency as the phase modulation frequency $f_m$ is extracted, as the $\sin\Delta\Phi_s$ component, by synchronous detection, but other odd harmonic components such as third, fifth, ... harmonic component may also be extracted. Moreover, the second harmonic component used as the $\cos\Delta\Phi_s$ component may also be replaced with other even harmonic components such as fourth, sixth, ... ones. The $\cos\Delta\Phi_s$ component need not always be extracted by the synchronous detector 25 but instead it may also be obtained by extracting a desired even harmonic component from the output of the photodetector 17 through use of a filter and rendering the detected output into DC form. Although in the above only the second-order term in Eq. (7) is used for the correcting signal Vc, other terms can be used. For example, in the case where the accuracy of correction may be sacrificed to some extent, the use of the first-order term CV permits the formation of the correcting signal generator 27 by only an amplifier.

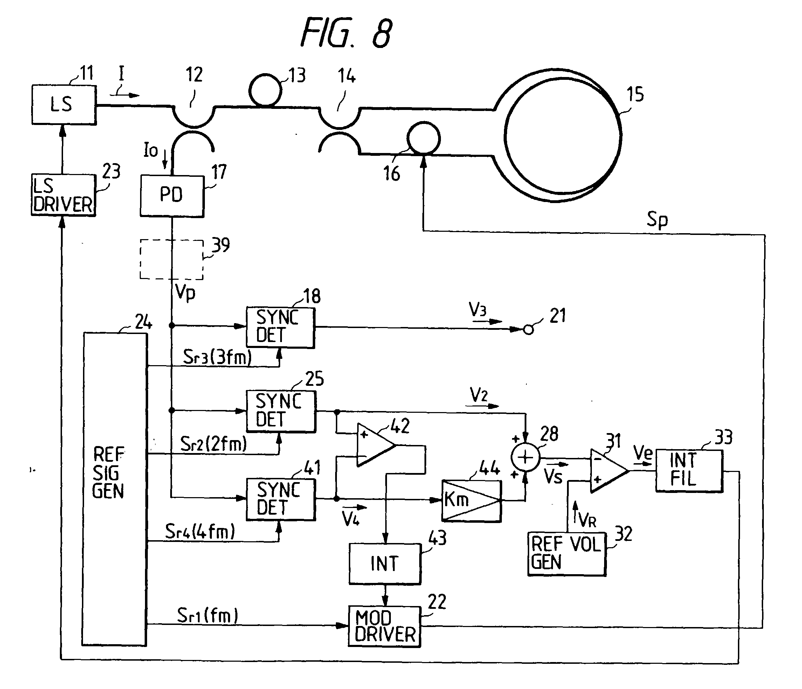

Fig. 8 illustrates an embodiment according to the second aspect of the present invention. In this embodiment which utilizes a method disclosed in Japanese Patent Application Laid Open No. 62-12811, a third harmonic component is extracted, as the sine component (an odd harmonic component), by the synchronous detector 18 to obtain the FOG output, and at the same time, second and fourth harmonic components are extracted, as the cosine components (even harmonic components), by synchronous detectors 25 and 41 and these even harmonic components are used to stabilize the Bessel function contained in the odd harmonic component and then the scale factor is stabilized following the present invention.

A third harmonic component of the phase modulation frequency $f_m$ is converted into a DC signal by the synchronous detector 18 including a low-pass filter using the reference signal Sr from the reference signal generator 24. The output DC signal corresponding to the third harmonic component is provided, with a proper gain, as the FOG output $V_3$ to the output terminal 21. The FOG output $V_3$ is expressed by the following equation:

$$V_3 = I \cdot K_{op}K_{pd}J_3(X)K_{A3} \cdot \sin\Delta\Phi_s$$

$$= K_3 \cdot \sin\Delta\Phi_s, \tag{25}$$

where $K_{A3}$ is the gain of the electrical circuit.

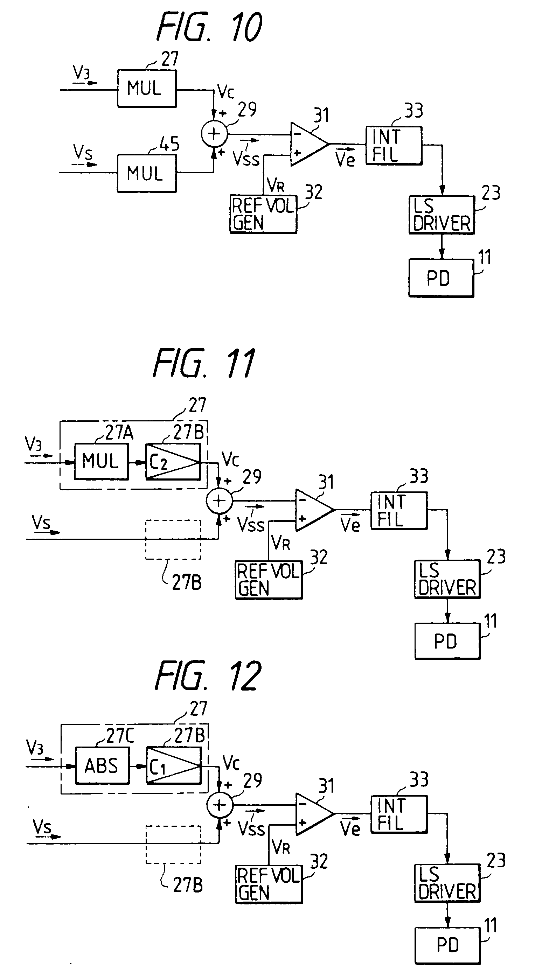

Incidentally, the proportional coefficients (or amplitudes) $K_1$ and $K_3$ of the sine components of odd harmonic components which are obtained by synchronous detection as indicated by Eqs. (4) and (25) are dependent on the value of the variable $X$ of the Bessel function as mentioned previously. Hence, in the above-mentioned Japanese Patent Application Laid Open No. 62-12811 an automatic control loop is formed which controls the modulation index A in the phase modulator 16 so that Bessel functions $J_2(X)$ and $J_4(X)$ are essentially equal to each other, that is, the second and fourth harmonic components in the output of the photodetector 17 are essentially equal to each other, by performing the phase modulation at the intersection ($X = 4.2$) of the Bessel functions $J_2(X)$ and $J_4(X)$ where the Bessel function $J_3(X)$ is maximum, as shown in Fig. 9. This will hereinafter be described.

At first, the second harmonic component of the phase modulation frequency in the output of the photodetector 17, expressed by Eq. (2), is synchronously detected by the synchronous detector 25 (including a low-pass filter) with a reference signal $S_{r2}$ of a frequency $2f_m$ and the fourth harmonic component is synchronously detected by the synchronous detector (including a low-pass filter) 41 with a reference signal $S_{r4}$ of a frequency $4f_m$. The respective outputs $V_2$ and $V_4$ converted by the synchronous detection into DC levels are expressed by the following equations:

$$V_2 = I \cdot K_{op} K_{pd} J_2(X) K_{A2} \cdot \cos\Delta\Phi_s$$

$$= K_2 \cdot \cos\Delta\Phi_s, \tag{26}$$

$$V_4 = I \cdot K_{op} K_{pd} J_4(X) K_{A4} \cdot \cos\Delta\Phi_s$$

$$= K_4 \cdot \cos\Delta\Phi_s, \tag{27}$$

where $K_{A2}$ and $K_{A4}$ are gains of electrical circuits.

Next, the output $V_2$ of the synchronous detector 25 is fed to a non-inverting input side of a differential amplifier 42 and the output $V_4$ of the synchronous detector 41 is fed to an inverting input side of the differential amplifier 42. The output of the differential amplifier 42 is applied to an integrator 43. The phase modulation driver 22 has a construction such that it increases the modulation index A and consequently the value X by increasing, on the basis of a positive signal from the integrator 43, the voltage of the modulator drive signal Sp of the drive frequency $f_m$ which is applied to the phase modulator 16 and that it decreases the modulation index A and consequently the value X by decreasing, on the basis of a negative signal from the integrator 43, the voltage of the modulator drive signal Sp of the drive frequency $f_m$ which is applied to the phase modulator 16. The modulation driver 22 constitutes the above-mentioned automatic control loop. Thus, in this embodiment the voltage of the modulator drive signal Sp which is fed to the phase modulator 16 is controlled by the modulator driver 22 so that when the output of the differential amplifier 42 is zero, that is, when $V_2 = V_4$ (the coefficients $K_2$ and $K_4$ being pre-adjusted so that they are equal to each other), the Bessel functions of the first kind $J_2(X)$ and $J_4(X)$ take the same value, that is, the value X is about 4.20.

The value of the Bessel function $J_3(X)$ can be stabilized by fixing the value X as mentioned above, but the optical loss $K_{op}$ in Eq. (25) which expresses the FOG output $V_3$ is likely to vary around 30% with a temperature change within the range of -20°C to +70°C. In view of this, according to the present invention, the second and fourth harmonic component outputs $V_2$ and $V_4$ of the synchronous detectors 25 and 41 are added at a predetermined ratio and the quantity of light I that is emitted from the light source 11 or the gain of the output from the photodetector 17 is controlled so that the added output (hereinafter referred to as a composite cosine component) becomes equal to the reference voltage. That is, the synchronous detector outputs $V_4$ is amplified by a factor of $K_m$ in an amplifier 44 and is then added to the synchronous detector output $V_2$ in the adder 28. The composite cosine component Vs which is the output of the adder 28 is expressed by the following equation:

$$Vs = V_2 + K_m \cdot V_4. \tag{28}$$

Now, pre-adjusting the gains $K_{A3}$ and $K_{A4}$ such that $K = K_{A2} \cdot K_{pd} = K_{A4} \cdot K_{pd}$, Eq. (28) is expressed by the following equation using Eqs. (26) and (27).

$$Vs = I_o K[J_2(X) + K_m J_4(X)]\cos\Delta\Phi_s$$

$$= I_o K \cdot F(X)\cos\Delta\Phi_s. \tag{29}$$

Now, calculating the bracketed value F(X) in Eq. (29) with $K_m$ set to 2.06, it is maximum at the position where $X = 4.20$ as indicated by the curve F(X) in Fig. 9 and the value F(X) is stable with respect to a variation in X at the peak of the curve. That is, the Bessel function $J_3(X)$ which is used in the FOG output also becomes maximum at the same position as that where the value F(X) is maximum. Accordingly, the composite cosine component Vs given by Eq. (29) can be used as a $\cos\Delta\Phi_s$ component stable with respect to the value X in the fiber optic gyro which has an operating point of $X = 4.20$. The output Vs of the adder 28, which is stable with respect to the value X, is differentially operated by the differential amplifier 31 with the reference voltage $V_R$ from the reference voltage generator 32. The output Ve of the differential amplifier 31 is given as follows:

$$Ve = V_R - Vs$$

$$= V_R - I_o K \cdot F(X) \cdot \cos\Delta\Phi_s. \tag{30}$$

The output Ve of the differential amplifier 31 is applied to the integrating filter 33 and its output is fed to the light source driver 23 to control the quantity of light I that is emitted from the light source 11. Assuming that $V_R = I_o K \cdot F(X) = K_R$ is set at the initial stage, the output Ve given by Eq. (30) is zero when no input angular rate is being applied to the optical fiber coil 15, that is, the phase difference $\Delta\Phi_s$ between the CW and CCW light beams in the optical fiber coil 15 is zero. Now, suppose that the quantity of light $I_o$ which reaches the photodetector 17 has been decreased owing to an ambient temperature change. In such an instance, the output Ve becomes a positive voltage. Let it be assumed that the integrating filter 33 yields a positive integrated voltage when supplied with the positive voltage. The light source driver 23 is so constructed as to increase the quantity of light from the light source 11 by the application of the positive integrated voltage, and it is controlled so that the input to the integrating filter 33, that is, the output Ve of the differential amplifier 31 is always zero. In consequence, the following equation holds:

$$V_R = I_o K \cdot F(X) \cdot \cos\Delta\Phi_s. \tag{31}$$

Hence, by setting $K = K_{pd} \cdot K_{A3}$ and substituting the relationship of Eq. (31) and the relationship of $I_o = K_{op} \cdot I$ into Eq. (25), the FOG output $V_3$ is expressed as follows:

$$V_3 = \{V_R J_3(X)/[F(X) \cdot \cos\Delta\Phi_s]\}\sin\Delta\Phi_s \tag{32}$$

$$= \{V_R J_3(X)/F(X)\}\tan\Delta\Phi_s. \tag{33}$$

As is evident from Eq. (32), the FOG output $V_3$ does not include the term of the quantity of light $I_o$ reaching the photodetector 17 nor does it include the gains $K_{A2}$, $K_{A3}$, $K_{A4}$, $K_{op}$, $K_{pd}$, etc. which have temperature dependence. In addition, since the value X is also fixed as referred to previously, it is possible to offer a fiber optic gyro which has a scale factor stable with respect to ambient temperature changes.

Incidentally, in the construction of Fig. 8, since the FOG output $V_3$ is obtained as a value proportional to the $\tan\Delta\Phi_s$ component as expressed by Eq. (33), the linearity of the FOG output with respect to the input angular rate $\Omega$ is particularly poor when the input angular velocity is large. Fig. 10 shows the principal part of a modified form of the Fig. 8 embodiment which is intended to improve the linearity of the FOG output.

In the construction depicted in Fig. 10, the FOG output $V_3$ and the output Vs of the adder 28 in Fig. 8 are squared by multipliers 27 and 45, respectively, and their outputs are added together by the adder 29. The multiplier 27 performs the function of the correcting signal generator 27 in the Fig. 7 embodiment and squares the FOG output $V_3$ and outputs it as the correcting signal Vc. The output Vss of adder 29 is expressed by the following equation:

$$Vss = Ks^2(\sin^2\Delta\Phi_s + \cos^2\Delta\Phi_s) = Ks. \tag{34}$$

In this case, the respective gains are initialized such that

$$I_o K_{pd} K_{A3} J_3(x) = I_o K\{J_2(X) + K_m J_4(X)\}$$

$$= I_o K \cdot F(X) = Ks. \tag{35}$$

The output Vss of the adder 29 is compared by the differential amplifier 31 with the reference voltage $V_R$ from the reference voltage generator 32, and the resulting error signal Ve is fed to the integrating filter 33. The output of the integrating filter 33 is supplied to the light source driver 23 to form a negative feedback control loop so that the error Ve is reduced to zero, providing $Ks^2 = V_R$. As a result, by substituting Eq. (35) into Eq. (25), the FOG output $V_3$ can be expressed as follows:

$$V_3 = Ks \cdot \sin\Delta\Phi_s = \sqrt{V_R} \cdot \sin\Delta\Phi_s \tag{36}$$

As can be seen from Eq. (36), the FOG output $V_3$ is stabilized independently of the quantity of light $I_o$. In addition, the $\sin\Delta\Phi_s$ component is higher than the $\tan\Delta\Phi_s$ component in the accuracy of approximation to the value of the phase difference $\Delta\Phi_s$ and provides the FOG output of an excellent linearity. Hence, the FOG output obtainable with the Fig. 10 embodiment is more excellent in linearity than the FOG output in the Fig. 8 embodiment which is expressed by Eq. (33).

Fig. 11 illustrates the principal part of another modification corresponding to the Fig. 10 embodiment. As in the case of Fig. 7, the FOG output $V_3$ is squared by the multiplier 27A and the multiplied output is amplified by a factor $C_2$ in the amplifier 27B to obtain the signal Vc, which is applied as a correcting signal to the adder 29, wherein it is added to the composite cosine component Vs from the adder 28 (Fig. 8). The output Vss of the adder 29 is expressed by the following equation:

$$Vss = Vs + C_2 \cdot V_3^2. \tag{37}$$

By pre-adjusting and setting respective gains so that Eq. (35) holds as is the case with Fig. 10, Eq. (37) is expressed as follows:

$$Vss = Ks(C_2 Ks \cdot \sin^2\Delta\Phi_s + \cos\Delta\Phi_s). \tag{38}$$

The output Vss from the adder 29 is compared by the differential amplifier 31 with the reference voltage $V_R$ from the reference voltage generator 32, and the resulting error signal Ve is fed to the integrating filter 33. The output of the integrating filter 33 is supplied to the light source driver 23 to form the negative feedback control loop, providing Vss = $V_R$. Eq. (38) is solved in the same manner as in the case of Eq. (21) in the embodiment of Fig. 7, and consequently, the FOG output $V_3$ is also expressed in the same manner as in the case of Eq. (23) and its linearity is also expressed as is the case with Eq. (24).

Fig. 12 illustrates in block form the principal part of still another modification corresponding to the Fig. 11 embodiment. The correcting signal generator 27 is comprised of an absolute value circuit 27C and an amplifier 27B, and only the first-order term $C_1V$ in Eq. (7) is used. The FOG output $V_3$ is rendered by the absolute value circuit 27A into an absolute value, which is amplified by a factor of $C_1$ in the amplifier 27B to obtain the correcting signal Vc. The correcting signal Vc and the output Vs from the adder 28 (Fig. 8) are added together by the adder 29. The output Vss of the adder 29 is expressed by the following equation:

$$Vss = Vs + C_1|V_3|. \tag{39}$$

By pre-adjusting and setting respective gains so that Eq. (35) holds as in the case of the Fig. 10 embodiment, Eq. (39) is given as follows:

$$Vss = Ks(C_1|\sin\Delta\Phi_s| + \cos\Delta\Phi_s). \tag{40}$$

The output Vss from the adder 29 is compared by the differential amplifier 31 with the reference voltage $V_R$ from the reference voltage generator 32 as in the above, and the resulting error signal Ve is provided to the integrating filter 33. The output of the integrating filter 33 is applied to the light source driver 23, establishing a feedback control loop which operates so that the error signal Ve is reduced to zero. Accordingly, the FOG output $V_3$ is expressed by the following equation:

$$V_3 = \{V_R/(C_1|\sin\Delta\Phi_s| + \cos\Delta\Phi_s)\}\sin\Delta\Phi_s. \tag{41}$$

As will be appreciated from Eq. (41), also in this embodiment the FOG output has nothing to do with the quantity of light $I_o$, and hence the scale factor is stable. Moreover, the linearity can be improved by a suitable selection of the coefficient $C_1$.

In the embodiments of Figs. 8, 10, 11 and 12 the output of the integrating filter 33 is fed back to the light source driver 23, but the same results as those described above could also be obtained by employing a construction wherein the automatic gain control circuit 39 is disposed at the output stage of the photodetector 17 as indicated by the broken line in Fig. 8 and the output of the integrating filter 33 is fed back to the automatic gain control circuit 39 to control its gain. In the embodiments of Figs. 11 and 12 the amplifier 27B may also be inserted in the path of the signal Vs as indicated by the broken line.

In the above-described embodiments the optical couplers 12 and 14 and the phase modulator 16 may also be formed by optical IC's.

As described above, according to the first aspect of the present invention, the sine and cosine components of the Sagnac phase difference $\Delta\Phi_s$ are detected from the output of the photodetector 17, the sine component is provided as the FOG output, the correcting signal is derived from the sine component, the cosine component is used to form a feedback loop for stabilizing the scale factor, and the correcting signal is introduced into the feedback loop. By this, the linearity of the FOG output can be improved. According to the second aspect of the present invention, the sine component and two cosine components of the Sagnac phase difference $\Delta\Phi_s$ in the output of the photodetector 17 are detected and the sine component is used as the FOG output. On the other hand, by controlling the modulation index of the phase modulator 16 so that the two cosine components are equal to each other, the variable X of the Bessel function is fixed at a constant value, and by adding the two cosine components at a predetermined ratio, the composite cosine component is produced. The composite cosine component is used to form the feedback loop for stabilizing the scale factor, by which it is possible to make the scale factor stable with respect to a temperature change.

## Claims

1. An optical-interference-type angular rate sensor wherein light from light source means is branched by branch means into clockwise and counterclockwise light beams for propagation through an optical path forming at least one loop, said clockwise and counterclockwise light beams, after having propagated through said optical path, are caused by interference means to interfere with each other, said clockwise and counterclockwise light beams are phase modulated by phase modulator means disposed between said branch means and one end of said optical path, the intensity of the interference light is detected by photodetector as an electrical signal, and a sine component of a Sagnac phase difference $\Delta\Phi_s$ which is caused by an angular rate applied to said optical path around its axis is demodulated by first demodulator means from said electrical signal, thereby detecting said angular rate, characterized in that said optical-interference-type angular rate sensor comprises:

second demodulator means for demodulating a cosine component of said Sagnac phase difference $\Delta\Phi_s$ from said electrical signal;

means for generating a scale factor stabilizing signal on the basis of said cosine component from said second demodulator means;

correcting signal generating means for generating a correcting signal on the basis of said sine component;

adder means for adding said correcting signal to said scale factor stabilizing signal;

reference value generating means for generating a reference value;

comparator means for comparing the output of said adder means with said reference value and for generating an error signal; and

feedback loop means whereby the level of said electrical signal that is applied to said first and second demodulator means is controlled so that said error signal is reduced to zero.

2. The angular rate sensor of claim 1, wherein said scale factor stabilizing signal generating means is means for extracting said cosine component from said second demodulator means and for providing it to said adder means.

3. The angular rate sensor of claim 1, wherein said scale factor stabilizing signal generating means is means for generating sum of the squares of said cosine and sine components and for providing it to said adder means.

4. The angular rate sensor of claim 1, wherein said correcting signal generating means is means for generating said correcting signal in accordance with a polynomial of a predetermined degree of high order using said sine component as a variable.

5. The angular rate sensor of claim 1, wherein said correcting signal generating means is means for multiplying the square of said sine component by a predetermined factor and for outputting the product as said correcting signal.

6. The angular rate sensor of claim 1, wherein said correcting signal generating means is means for multiplying the absolute value of said sine component by a predetermined factor and for outputting the product as said correcting signal.

7. The angular velocity sensor of claim 1, wherein said light source means includes a light source for emitting said light and a light source driver for driving said light source, and said feedback loop is means for controlling said light source driver on the basis of said error signal to thereby control the quantity of light that is emitted from said light source.

8. The angular velocity sensor of claim 1, wherein said feedback loop means includes gain control means inserted at the output side of said photodetector means, said feedback loop means being means for controlling said gain control means on the basis of said error signal to thereby control the level of the output electrical signal of said photodetector means.

9. An optical-interference-type angular rate sensor wherein light from a light source is branched into clockwise and counterclockwise light beams for propagation through an optical path forming at least one loop, said clockwise and counterclockwise light beams, after having propagated through said optical path, are caused by interference means to interfere with each other, said clockwise and counterclockwise light beams are phase modulated by phase modulator means disposed between said branch means and one end of said optical path, the intensity of the interference light is detected by photodetector means as an electrical signal, and a sine component of a Sagnac phase difference $\Delta\Phi_s$ which is caused by an angular rate applied to said optical path around its axis is demodulated by sine component demodulator means from said electrical signal, thereby detecting said angular rate, characterized in that said optical-interference-type angular rate sensor comprises:

first and second cosine component demodulator means for demodulating first and second cosine components of said Sagnac phase difference $\Delta\Phi_s$ from said electrical signal;

first subtractor means for calculating the difference between said first and second cosine components;

modulation control loop means for controlling, on the basis of the output of said first subtractor means, a modulation index of said phase modulator means so that said first and second cosine components become equal to each other;

cosine component combine means for combining said first and second cosine components at a predetermined ratio into a composite cosine component;

comparator means for comparing a signal corresponding to said composite cosine component with a predetermined reference value and for generating an error signal; and

level control feedback loop means whereby the level of said electrical signal which is applied to said first and second cosine component demodulator means and said sine component demodulator means is controlled so that said error signal is reduced to zero.

10. The angular velocity sensor of claim 9, which further comprises correcting signal generating means for generating a correcting signal on the basis of said sine component and adder means for adding said correcting signal to a signal corresponding to said composite cosine component and for providing the added output to said comparator means.

11. The angular velocity sensor of claim 10, wherein said correcting signal generating means is means for outputting the square of said sine component as said correcting signal and said adder means is means for adding the square of said composite cosine component, as a signal corresponding to said composite cosine component, to said correcting signal.

12. The angular velocity sensor of claim 10, wherein said correcting signal generating means includes means for generating the square of said sine component and said adder means is means for adding the square of said sine component and said composite cosine component at a predetermined ratio and for applying the added output to said comparator means as a signal corresponding to said composite cosine component.

13. The angular velocity sensor of claim 10, wherein said correcting signal generating means includes absolute value means for generating the absolute value of said sine component and said adder means is means for adding the output of said absolute value means and said composite cosine component at a predetermined ratio and for applying the added output to said comparator means as a signal corresponding to said composite cosine component.

14. The angular velocity sensor of claim 9 or 10, wherein said light source means includes a light source for emitting said light and a light source driver for driving said light source and said level control feedback loop means is means for controlling said light source driver on the basis of said error signal to thereby control the quantity of light that is emitted from said light source.

15. The angular velocity sensor of claim 9 or 10, wherein said level control feedback loop means includes gain control means inserted at the output side of said photodetector means, said level control feedback loop means being means for controlling said gain control means on the basis of said error signal to thereby control the level of the output electrical signal of the photodetector means.

16. The angular velocity sensor of claim 9 or 10, wherein said first and second cosine components are second and fourth harmonic components of a phase modulation frequency, said sine component is a third harmonic component of said phase modulation frequency and said cosine component combine means is means for adding said first and second cosine components in the ratio 1:2.06 to obtain said composite cosine component.

**Patentansprüche**

1. Optisch-interferometrischer Winkelgeschwindigkeitssensor, bei dem Licht von einer Lichtquelleneinrichtung mittels Verzweigungsmitteln in einen Uhrzeigersinn-Lichtstrahl und einen Gegenuhrzeigersinn-Lichtstrahl zum Durchlauf durch einen wenigstens eine Schleife bildenden optischen Weg aufgeteilt wird, der Uhrzeigersinn- und der Gegenuhrzeigersinn-Lichtstrahl nach Durchlauf durch den optischen Weg von Interferenzmitteln veranlaßt werden, miteinander zu interferieren, der Uhrzeigersinn- und der Gegenuhrzeigersinn-Lichtstrahl von Phasenmodulationsmitteln, die zwischen den Verzweigungsmitteln und einem Ende des optischen Wegs angeordnet sind, phasenmoduliert werden, die Intensität des Interferenzlichts von einem Photodetektor als ein elektrisches Signal erfaßt wird, und eine Sinuskomponente einer Sagnac-Phasendifferenz $\Delta\Phi_s$, welche von einer Winkelgeschwindigkeit verursacht wird, der der optische Weg um seine Achse ausgesetzt wird, von ersten Demodulatormitteln aus dem elektrischen Signal demoduliert wird, um dadurch die Winkelgeschwindigkeit zu ermitteln, dadurch gekennzeichnet, daß der opto-interferometrische Winkelgeschwindigkeitssensor umfaßt:

zweite Demodulatormittel zum Demodulieren einer Cosinuskomponente der Sagnac-Phasendifferenz $\Delta\Phi_s$ aus dem elektrischen Signal,

Mittel zur Erzeugung eines Skalierungsfaktor-Stabilisierungssignals auf der Basis der Cosinuskomponente von den zweiten Demodulatormitteln,

Korrektursignal-Generatormittel zur Erzeugung eines Korrektursignals auf der Basis der Sinuskomponente,

Addiermittel zum Addieren des Korrektursignals zu dem Skalierungsfaktor-Stabilisierungssignal,

Referenzwert-Generatormittel zur Erzeugung eines Referenzwerts,

Komparatormittel zum Vergleich des Ausgangssignals der Addiermittel mit dem Referenzwert und zur Erzeugung eines Fehlersignals, und

Rückkopplungsschleifenmittel, durch die der Pegel des elektrischen Signals, das an die ersten und die zweiten Demodulatormittel angelegt wird, so gesteuert wird, daß das Fehlersignal auf Null reduziert wird.

2. Winkelgeschwindigkeitssensor nach Anspruch 1, bei dem die Skalierungsfaktor-Stabilisierungssignal-Generatormittel Mittel zum Extrahieren der Cosinuskomponente von den zweiten Demodulatormitteln und zur Lieferung derselben an die Addiermittel sind.

3. Winkelgeschwindigkeitssensor nach Anspruch 1, bei dem die Skalierungsfaktor-Stabilisierungssignal-Generatormittel Mittel sind zum Erzeugen der Summe der Quadrate der Cosinus- und der Sinuskomponente und zur Lieferung derselben an die Addiermittel.

4. Winkelgeschwindigkeitssensor nach Anspruch 1, bei dem die Korrektursignal-Generatormittel Mittel sind zum Erzeugen des Korrektursignals nach Maßgabe eines Polynoms eines vorbestimmten Grads hoher Ordnung mit der Sinuskomponente als Variable.

5. Winkelgeschwindigkeitssensor nach Anspruch 1, bei dem die Korrektursignal-Generatormittel Mittel sind zum Multiplizieren des Quadrats der Sinuskomponente mit einem vorbestimmten Faktor und zur Ausgabe des Produkts als das Korrektursignal.

6. Winkelgeschwindigkeitssensor nach Anspruch 1, bei dem die Korrektursignal-Generatormittel Mittel sind zum Multiplizieren des Absolutwerts der Sinuskomponente mit einem vorbestimmten Faktor und zur Ausgabe des Produkts als das Korrektursignal.

7. Winkelgeschwindigkeitssensor nach Anspruch 1, bei dem die Lichtquelleneinrichtung eine Lichtquelle zur Emission des Lichts und einen Lichtquellentreiber zur Ansteuerung der Lichtquelle enthält und die Rückkopplungsschleife Mittel darstellt zur Steuerung des Lichtquellentreibers auf der Grundlage des Fehlersignals, um dadurch die Lichtmenge zu steuern, die von der Lichtquelle emittiert wird.

8. Winkelgeschwindigkeitssensor nach Anspruch 1, bei dem die Rückkopplungsmittel Verstärkungssteuermittel enthalten, die an der Ausgangsseite der Photodetektormittel angeordnet sind, wobei die Rückkopplungsschleifenmittel Mittel sind zur Steuerung der Verstärkungssteuermittel auf der Basis des Fehlersignals, um dadurch den Pegel des ausgegebenen elektrischen Signals der Photodetektormittel zu steuern.

9. Opto-interferometrischer Winkelgeschwindigkeitssensor, bei dem Licht von einer Lichtquelle auf einen Uhrzeigersinn-Lichtstrahl und einen Gegenuhrzeigersinn-Lichtstrahl zum Durchlauf durch einen wenigstens eine Schleife bildenden optischen Weg aufgeteilt werden, der Uhrzeigersinn- und der Gegenuhrzeigersinn-Lichtstrahl nach Durchlaufen des optischen Wegs von Interferenzmitteln veranlaßt werden, miteinander zu interferieren, der Uhrzeigersinn- und Gegenuhrzeigersinn-Lichtstrahl von Phasenmodulatormitteln phasenmoduliert werden, die zwischen den Verzweigungsmitteln und einem Ende des optischen Wegs angeordnet sind, die Intensität des Interferenzlichts mittels Photodetektormitteln als ein elektrisches Signal erfaßt wird und eine Sinuskomponente einer Sagnac-Phasendifferenz $\Delta\Phi_s$, welche von einer Winkelgeschwindigkeit verursacht wird, der der optische Weg um seine Achse ausgesetzt wird, von Sinuskomponenten-Demodulatormitteln aus dem elektrischen Signal demoduliert wird, um dadurch die Winkelgeschwindigkeit zu ermitteln, dadurch gekennzeichnet, daß der opto-interferometrische Winkelgeschwindigkeitssensor umfaßt:

erste und zweite Cosinuskomponenten-Demodulatormittel zum Demodulieren erster und zweiter Cosinuskomponenten der Sagnac-Phasendifferenz $\Delta\Phi_s$ aus dem elektrischen Signal,

erste Subtraktionsmittel zur Berechnung der Differenz zwischen der ersten und der zweiten Cosinuskomponente,

Modulationssteuer-Schleifenmittel zur Steuerung, auf der Basis des Ausgangssignals der ersten Subtraktionsmittel, eines Modulationsindex der Phasenmodulatormittel derart, daß die erste und die zweite Cosinuskomponente einander gleich werden,
Cosinuskomponenten-Kombiniermittel zum Kombinieren der ersten und der zweiten Cosinuskomponente in
einem vorbestimmten Verhältnis zu einer Verbundcosinuskomponente,
Komparatormittel zum Vergleich eines Signals entsprechend der Verbundcosinuskomponente mit einem vorbestimmten Referenzwert und zur Erzeugung eines Fehlersignals, und
Pegelsteuer-Rückkopplungsschleifenmittel, durch die der Pegel des elektrischen Signals, das an die ersten
und zweiten Cosinuskomponenten-Demodulatormittel und die Sinuskomponenten-Demodulatormittel angelegt
wird, so gesteuert wird, daß das Fehlersignal auf Null reduziert wird.

10. Winkelgeschwindigkeitssensor nach Anspruch 9, der ferner Korrektursignal-Generatormittel umfaßt zur Erzeugung
eines Korrektursignals auf der Basis der Sinuskomponente, und Addiermittel zum Addieren des Korrektursignals
zu einem Signal entsprechend der Verbundcosinuskomponente und zur Lieferung des addierten Ausgangssignals
an die Komparatormittel.

11. Winkelgeschwindigkeitssensor nach Anspruch 10, bei dem die Korrektursignal-Generatormittel Mittel sind zur Ausgabe des Quadrats der Sinuskomponente als das Korrektursignal, und die Addiermittel Mittel sind zum Addieren
des Quadrats der Verbundcosinuskomponente als ein der Verbundcosinuskomponente entsprechendes Signal, zu
dem Korrektursignal.

12. Winkelgeschwindigkeitssensor nach Anspruch 10, bei dem die Korrektursignal-Generatormittel Mittel enthalten zur
Erzeugung des Quadrats der Sinuskomponente und die Addiermittel Mittel sind zum Addieren des Quadrats der
Sinuskomponente und der Verbundcosinuskomponente in einem vorbestimmten Verhältnis und zum Anlegen des
addierten Ausgangssignals an die Komparatormittel als eines Signals, das der Verbundcosinuskomponente entspricht.

13. Winkelgeschwindigkeitssensor nach Anspruch 10, bei dem die Korrektursignal-Generatormittel Absolutwertmittel
enthalten zur Erzeugen des Absolutwerts der Sinuskomponente und die Addiermittel Mittel sind zum Addieren des
Ausgangssignals der Absolutwertmittel und der Verbundcosinuskomponente in einem vorbestimmten Verhältnis
und zum Anlegen des addierten Ausgangssignals an die Komparatormittel als ein Signal, das der Verbundcosinuskomponente entspricht.

14. Winkelgeschwindigkeitssensor nach Anspruch 9 oder 10, bei dem die Lichtquellenmittel eine Lichtquelle enthalten
zur Emission des Lichts sowie einen Lichtquellentreiber zur Ansteuerung der Lichtquelle und die Pegelsteuer-Rückkopplungsschleifenmittel Mittel sind zur Steuerung des Lichtquellentreibers auf der Basis des Fehlersignals, um
dadurch die von der Lichtquelle emittierte Lichtmenge zu steuern.

15. Winkelgeschwindigkeitssensor nach Anspruch 9 oder 10, bei dem die Pegelsteuer-Rückkopplungsschleifenmittel
Verstärkungssteuermittel enthalten, die an der Ausgangsseite der Photodetektormittel angeordnet sind, wobei die
Pegelsteuer-Rückkopplungsschleifenmittel Mittel sind zur Steuerung der Verstärkungssteuermittel auf der Basis
des Fehlersignals, um dadurch den Pegel des ausgegebenen elektrischen Signals der Photodetektormittel zu steuern.

16. Winkelgeschwindigkeitssensor nach Anspruch 9 oder 10, bei dem die erste und die zweite Cosinuskomponente
zweite und vierte harmonische Komponenten einer Phasenmodulationsfrequenz sind, die Sinuskomponente eine
dritte harmonische Komponente der Phasenmodulationsfrequenz ist und die Cosinuskomponenten-Kombiniermittel
Mittel sind zum Addieren der ersten und der zweiten Cosinuskomponente in dem Verhältnis 1:2,06 zum Erhalt der
Verbundcosinuskomponente.

## Revendications

1. Capteur de vitesse angulaire du type à interférence optique dans lequel de la lumière provenant d'une source de
lumière est divisée par un moyen de division en des faisceaux de lumière dans le sens des aiguilles d'une montre
et dans le sens contraire des aiguilles d'une montre pour propagation dans un trajet optique formant au moins une
boucle, lesdits faisceaux de lumière dans le sens des aiguilles d'une montre et dans sens contraire des aiguilles
d'une montre, après s'être propagés dans ledit trajet optique, sont amenés à interférer l'un avec l'autre par un moyen d'interférence, lesdits faisceaux de lumière dans le sens des aiguilles d'une montre et dans le sens contraire des aiguilles d'une montre sont modulés en phase par un moyen modulateur de phase disposé en série entre ledit moyen de division et une extrémité dudit trajet optique, l'intensité de la lumière d'interférence est détectée sous forme d'un signal électrique par un moyen photodétecteur, et la composante sinus de la différence de phase de Sagnac $\Delta\Phi_s$ qui est provoquée par une vitesse angulaire appliquée audit trajet optique autour de son axe, est démodulée par un premier moyen démodulateur pour détecter ainsi ladite vitesse angulaire, caractérisé en ce que ledit capteur de vitesse angulaire du type à interférence optique comprend :

un second moyen démodulateur pour démoduler une composante cosinus de ladite différence de phase $\Delta\Phi_s$ provenant dudit signal électrique ;
un moyen pour produire un signal de stabilisation de facteur d'échelle sur la base de ladite composante cosinus provenant dudit second moyen démodulateur ;
un moyen générateur de signal de correction pour produire un signal de correction sur la base de ladite composante sinus ;
un moyen additionneur pour additionner ledit signal de correction audit signal de stabilisation de facteur d'échelle ;
un moyen générateur de tension de référence pour produire une valeur de référence ;
un moyen comparateur pour comparer la sortie dudit moyen additionneur avec ladite valeur de référence et pour produire un signal d'erreur ; et
un moyen formant boucle de contre-réaction qui commande le niveau dudit signal électrique qui est appliqué auxdits premier et second moyens démodulateurs pour réduire ledit signal d'erreur à zéro.

2. Capteur de vitesse angulaire selon la revendication 1, dans lequel ledit moyen générateur de signal de stabilisation de facteur d'échelle est un moyen pour extraire ladite composante cosinus dudit second moyen démodulateur et pour la délivrer audit moyen additionneur.

3. Capteur de vitesse angulaire selon la revendication 1, dans lequel ledit moyen générateur de signal de stabilisation de facteur d'échelle est un moyen pour produire la somme des carrées desdites composantes cosinus et sinus et pour la délivrer audit moyen additionneur.

4. Capteur de vitesse angulaire selon la revendication 1, dans lequel ledit moyen générateur de signal de correction est un moyen pour produire ledit signal de correction en fonction d'un polynôme d'un degré prédéterminé d'ordre élevé en utilisant ladite composante sinus comme variable.

5. Capteur de vitesse angulaire selon la revendication 1, dans lequel ledit moyen générateur de signal de correction est un moyen pour multiplier le carré de ladite composante sinus par un facteur prédéterminé et pour sortir le résultat comme signal de correction.

6. Capteur de vitesse angulaire selon la revendication 1, dans lequel ledit moyen générateur de signal de correction est un moyen pour multiplier la valeur absolue de ladite composante sinus par un facteur prédéterminé et pour sortir le résultat comme signal de correction.

7. Capteur de vitesse angulaire selon la revendication 1, dans lequel ledit moyen formant source de lumière comprend une source de lumière pour émettre ladite lumière et un circuit d'attaque de source de lumière pour attaquer ladite source de lumière, et dans lequel ladite boucle de contre-réaction est un moyen pour commander ledit circuit d'attaque de source de lumière sur la base dudit signal d'erreur pour commander ainsi la quantité de lumière qui est émise par ladite source de lumière.

8. Capteur de vitesse angulaire selon la revendication 1, dans lequel ledit moyen formant boucle de contre-réaction comprend un moyen de commande de gain inséré du coté sortie dudit moyen photodétecteur, ledit moyen formant boucle de contre-réaction étant un moyen pour commander ledit moyen de commande de gain sur la base dudit signal d'erreur pour commander ainsi le niveau du signal électrique de sortie dudit moyen photodétecteur.

9. Capteur de vitesse angulaire du type à interférence optique dans lequel de la lumière provenant d'une source de lumière est divisée par un moyen de division en des faisceaux de lumière dans le sens des aiguilles d'une montre et dans le sens contraire des aiguilles d'une montre pour propagation dans un trajet optique formant au moins une boucle, lesdits faisceaux de lumière dans le sens des aiguilles d'une montre et dans sens contraire des aiguilles d'une montre, après s'être propagés dans ledit trajet optique, sont amenés à interférer l'un avec l'autre par un moyen d'interférence, lesdits faisceaux de lumière dans le sens des aiguilles d'une montre et dans le sens contraire des aiguilles d'une montre sont modulés en phase par un moyen modulateur de phase disposé entre ledit moyen de division et une extrémité dudit trajet optique, l'intensité de la lumière d'interférence est détectée sous forme d'un signal électrique par un moyen photodétecteur, et une composante sinus de la différence de phase de Sagnac $\Delta\Phi_s$, qui est provoquée par une vitesse angulaire appliquée audit trajet optique autour de son axe, est démodulée par un moyen démodulateur de composante sinus à partir dudit signal électrique, pour détecter ainsi ladite vitesse angulaire, caractérisé en ce que le capteur de vitesse angulaire du type à interférence optique comprend :

des premier et second moyens démodulateurs de composantes cosinus pour démoduler des première et seconde composantes cosinus de ladite différence de phase de Sagnac $\Delta\Phi_s$, à partir dudit signal électrique ;
un premier moyen soustracteur pour calculer la différence entre lesdites première et seconde composantes cosinus ;
un moyen formant boucle de commande de modulation pour commander l'indice de modulation dudit moyen modulateur de phase sur la base de la sortie dudit premier moyen soustracteur pour que lesdites première et seconde composantes cosinus soient égales l'une à l'autre ;
un moyen de combinaison de composantes cosinus pour combiner lesdites première et seconde composantes cosinus suivant un rapport prédéterminé en une composante cosinus composite ;
un moyen comparateur pour comparer un signal correspondant à ladite composante cosinus composite avec une valeur de référence prédéterminée et pour produire un signal d'erreur ; et
un moyen formant boucle de contre-réaction de commande qui commande le niveau dudit signal électrique qui est appliqué auxdits premier et second moyens démodulateurs de composantes cosinus et audit moyen démodulateur de composante sinus pour réduire le signal d'erreur à zéro.

10. Capteur de vitesse angulaire selon la revendication 9, qui comprend en outre un moyen générateur de signal de correction pour produire un signal de correction sur la base de ladite composante sinus et un moyen additionneur pour additionner ledit signal de correction à un signal correspondant à ladite composante cosinus composite et pour délivrer la sortie additionnée audit moyen comparateur.

11. Capteur de vitesse angulaire selon la revendication 10, dans lequel ledit moyen générateur de signal de correction est un moyen pour sortir le carré de ladite composante sinus comme signal de correction et dans lequel ledit moyen additionneur est un moyen pour additionner le carré de ladite composante cosinus composite, comme signal correspondant à ladite composante cosinus composite, audit signal de correction.

12. Capteur de vitesse angulaire selon la revendication 10, dans lequel ledit moyen générateur de signal de correction comprend un moyen pour produire le carré de ladite composante sinus, et dans lequel ledit moyen additionneur est un moyen pour additionner le carré de ladite composante sinus et ladite composante cosinus composite suivant un rapport prédéterminé et pour appliquer la sortie additionnée audit moyen comparateur en tant que signal correspondant à ladite composante cosinus composite.

13. Capteur de vitesse angulaire selon la revendication 10, dans lequel ledit moyen générateur de signal de correction comprend un moyen de formation de valeur absolue pour produire la valeur absolue de ladite composante sinus, et dans lequel ledit moyen additionneur est un moyen pour additionner la sortie dudit moyen de formation de valeur absolue et ladite composante cosinus composite suivant un rapport prédéterminé et pour appliquer la sortie additionnée audit moyen comparateur en tant que signal correspondant à ladite composante cosinus composite.

14. Capteur de vitesse angulaire selon la revendication 9 ou 10, dans lequel ledit moyen formant source de lumière comprend une source de lumière pour émettre ladite lumière et un circuit d'attaque de source de lumière pour attaquer ladite source de lumière, et dans lequel ledit moyen formant boucle de contre-réaction de commande de niveau est un moyen pour commander ledit circuit d'attaque de source de lumière sur la base dudit signal d'erreur pour commander ainsi la quantité de lumière qui est émise par ladite source de lumière.

15. Capteur de vitesse angulaire selon la revendication 9 ou 10, dans lequel ledit moyen formant boucle de contre-réaction de commande de niveau comprend un moyen de commande de gain inséré du coté sortie dudit moyen photodétecteur, ledit moyen formant boucle de contre-réaction de commande de niveau étant un moyen pour commander ledit moyen de commande de gain sur la base dudit signal d'erreur pour commander ainsi le niveau du signal électrique de sortie dudit moyen photodétecteur.

16. Capteur de vitesse angulaire selon la revendication 9 ou 10, dans lequel lesdites première et seconde composantes cosinus sont des deuxième et quatrième composantes harmoniques d'une fréquence de modulation de phase, dans lequel ladite composante sinus est une troisième composante harmonique de ladite fréquence de modulation de phase, et dans lequel ledit moyen de combinaison de composantes cosinus est un moyen pour additionner lesdites première et seconde composantes cosinus dans le rapport de 1 à 2,06 pour obtenir ladite composante cosinus composite.

# FIG. 1 PRIOR ART

# FIG. 2

# FIG. 3A

# FIG. 3B

# FIG. 4

# FIG. 9

FIG. 5

EP 0 569 993 B1

## FIG. 6A

PHASE DIFFERENCE Δφs (deg)

## FIG. 6B

PHASE DIFFERENCE Δφs (deg)

# FIG. 7

FIG. 8

EP 0 569 993 B1

## FIG. 10

## FIG. 11

## FIG. 12